# EUROPEAN PATENT APPLICATION

(11) **EP 2 192 035 A1**
(43) Date of publication of application: **02.06.2010**
(21) Application number: 08447047.5
(22) Date of filing: 26.11.2008
(51) Int. Cl.: B62J 99/00

(54) **Electronic charging device with USB power output for bicycle**

(71) Applicant: Liebl, Martin, 8520 Kuurne (BE)
(72) Inventor: Liebl, Martin, 8520 Kuurne (BE)

(57) **Abstract**

The invention comprises a universal charging system for multiple portable electronic devices. Installed on your bicycle it will generate power through the movement of the bicycle wheels. The connection with the portable electronic device is given by a Universal Serial Bus (USB) plug. The main parts of this construction are
A dynamo driven by the bicycle wheel movement
A central electronic unit
An USB power output.

## Description

### FIELD OF THE INVENTION

The present invention relates generally to a charger system, installed on bicycle, to provide power for a portable electronic device such as a portable telephone, a portable music or mp-3 player, PDA, digital camera, GPS or the like.

### BACKGROUND OF THE INVENTION

There are several known ways to recharge a cellular phone battery and even though these means of recharging a cellular phone battery exist, one often ends up with a discharged battery at the time to hit the road. Thus, there is a need for an electronic charging device installed on bike to act as a mobile power supply for several electronic devices.

Although there is a wide array of portable charging devices, such as hand cranked dynamos and the like, there don't exist any charging systems combining a dynamo, trough a central electronic unit, with an USB power output such as those to be discussed in herein.

### SUNIMARY OF THE INVENTION

In view of the foregoing disadvantages inherent in the known apparatus now present in the prior art, the present invention, which will be described subsequently in greater detail, is to provide objects and advantages which are:

To have an electrical charging system installed on bicycle to provide a mobile power supply for any portable electronic device with usb connection.

Therefore the construction comprises the following elements, which in reality don't
have to be separate parts. In theory everything could be comprised in one major box.
A power generator
A central electronic unit
An USB connector for power output

There has thus been outlined, rather broadly, the more important features if the invention in order that the detailed description thereof that follows may be better understood, and in order that the present contribution to the art may be better appreciated. There are additional features of the invention that will be described hereinafter and which will form the subject matter of the claims appended hereto.

In this respect, before explaining the embodiment of the invention in detail, it is to be understood that the invention is not limited in its application to the details of construction and to the arrangement of the components set forth in the following description or illustrated in the drawings.

The invention is capable of other embodiments and of being practiced and carried out in various ways. Moreover, the term "portable device" refers to any of a variety of electronic devices currently on the market as well as all other similar portable devices yet to be invented. Also, it is to be understood that the phraseology and terminology employed herein are for the purpose of description and should not be regarded as limiting.

### BRIEF DESCRIPTION OF THE DRAWINGS

Illustration 1:
   A: dynamo
   B: connection dynamo-central unit
   C: central unit
   D: USB output
Illustration 2a:
   System installed on bike
Illustration 2b
   System installed on bike
Illustration 2c
   One-piece version of the system installed on bike

### Detailed description

A universal charger system for various electronic devices is installed on bicycle. Power input comes from a dynamo(**101**), mounted on the bicycle, most likely the bicycle frame, using the motion of the bicycle's wheel to generate power. The dynamo is connected to a central electronic unit**(103)**, which is also fitted on one of the bicycle's parts, or is comprised together with the dynamo in a single piece**(105)**. The central unit transforms the dynamo input and feeds an USB (universal serial bus) output(**104**).

This USB output may be used to feed any electronic device, which can provide the needed USB connection.

The USB port can be comprised in the box which comprises the invention, or it can be given by a cable of variable length, so that a possible backpack or pocket of the bicycle driver can be reached.

The connections in this system are fully equipped to fulfil their function with perfect connectivity and especially waterproof qualities, to guarantee optimal function in any weather conditions.

With respect to the above description then, it is to be realized that the optimum dimensional relationships for the parts of the invention, to include variations in size, materials, shape, form, function and manner of operation, assembly and use,
are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

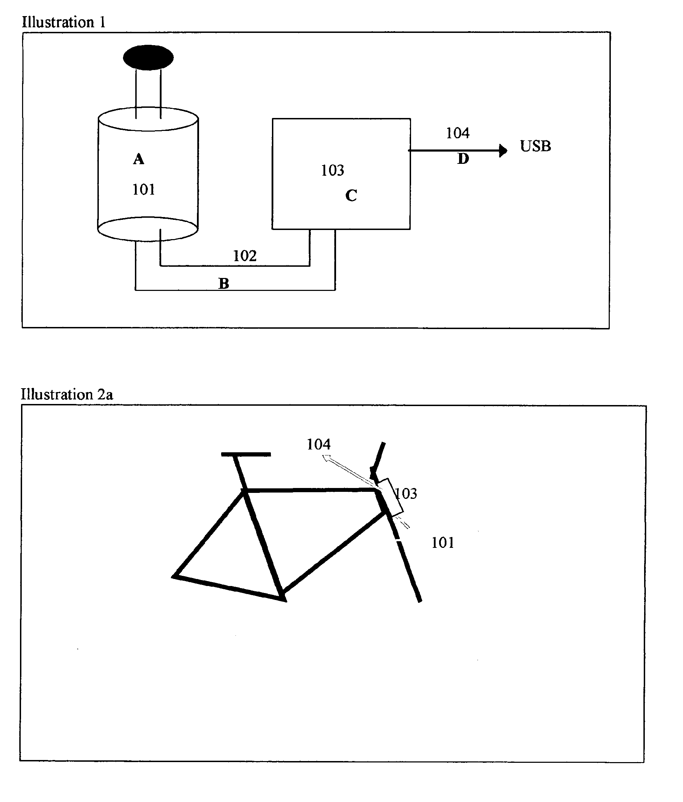

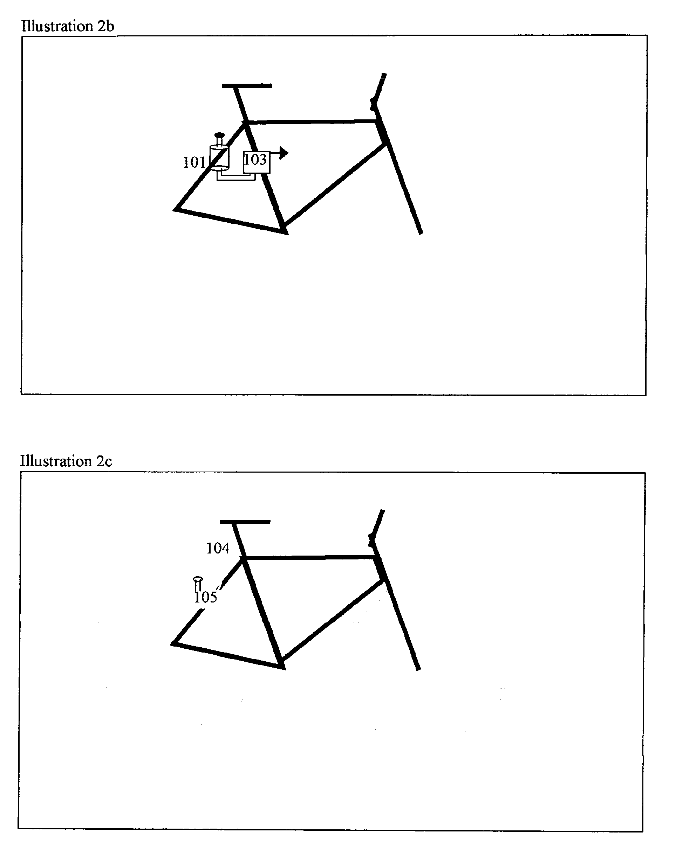

## Claims

1. **:** A universal charger system for electric portable devices, to be installed on bicycle, feeding an USB power output.

2. **:** A universal charger system for electric portable devices as described in claim 1 wherein:
a dynamo, driven by the bicycle wheel movement, as power generator.

3. **:** A universal charger system for electric portable devices as described in claim 1 wherein:
a central electronic unit transforming the dynamo input into a USB power output.

4. **:** A universal charger system for electric portable devices as described in claim 1 wherein:
a USB power output, fitted into the central electronic unit, or given by a cable of variable length.

5. **:** A universal charger system for electric portable devices as described in claim 1 wherein:
All parts from claims 1-4 can be comprised in one piece.
